# EUROPÄISCHE PATENTANMELDUNG

(11) **EP 2 156 939 A1**
(43) Veröffentlichungstag der Anmeldung: **24.02.2010**
(21) Anmeldenummer: 08014636.8
(22) Anmeldetag: 18.08.2008
(51) Int. Cl.: B29C 65/18, B65B 51/16, B65D 75/32

(54) **Vorrichtung zur Walzensiegelung von Folien**

(71) Anmelder: Uhlmann Pac-Systeme GmbH & Co. KG, 88471 Laupheim (DE)
(72) Erfinder: Felk, Günter, 89079 Einsingen (DE)
(74) Vertreter: Wächter, Jochen

(57) **Zusammenfassung**

Die Vorrichtung zur Walzensiegelung von Folien weist eine drehbare Siegelwalze (2) und eine drehbaren Gegenwalze (4) zur Siegelung einer Deckfolie (6) auf eine Formfolie (8) auf. Dabei sind die Siegelwalze (2) und die Gegenwalze (4) gemeinsam verschiebbar oder um eine gemeinsame Schwenkachse verschwenkbar, wobei der Abstand zwischen der Siegelwalze (2) und der Gegenwalze (4) konstant bleibt.

## Beschreibung

Die Erfindung betrifft eine Vorrichtung zur Walzensiegelung von Folien mit einer drehbaren Siegelwalze und einer drehbaren Gegenwalze zur Siegelung einer Deckfolie auf eine Formfolie, die mit mehreren Höfen ausgestattet ist.

Derartige Vorrichtungen sind seit langem bekannt und werden in erster Linie bei der Herstellung von Tablettenblistern verwendet. Dabei wird die Deckfolie zwischen den beiden Walzen auf die Stege der Formfolie, welche sich zwischen den Höfen befinden, aufgesiegelt. Hierzu ist die Siegelwalze üblicherweise beheizt, wie es aus der DE 10 2005 030 211 A1 bekannt ist.

Es ist bekannt, die beiden Walzen jeweils mit einem eigenen Antrieb unabhängig voneinander laufen zu lassen, um eine Verschiebung und damit Anpassung der Folien zueinander zu gewährleisten. Dies ist beispielsweise in der DE 19 17 208 A beschrieben.

Aus der DE 100 52 218 A1 ist eine Vorrichtung zur Walzensiegelung von Folien bekannt, bei der die beiden Walzen schwenkbar gelagert sind, wobei die Schwenklager voneinander entkoppelt sind.

Bei allen bekannten Vorrichtungen zur Walzensiegelung von Folien ist es jedoch mit erheblichem Aufwand verbunden, zwischen verschiedenen Folien- und Formattypen zu wechseln. Oftmals ist es sinnvoll, unterschiedliche Folienverläufe zu verwenden. In bestimmten Anwendungen ist es vorteilhaft, dass die Formfolie die Gegenwalze umschlingt und somit einen Formschluss mit dieser bildet. Bei anderen Anwendungen, insbesondere bei der Siegelung von Formfolien mit sehr großen Höfen, muss eine Umschlingung der Gegenwalze durch die Formfolie verhindert werden. In diesen Fällen ist eine gerade Durchführung der Formfolie durch die Vorrichtung zur Walzensiegelung vorteilhaft.

Der vorliegenden Erfindung liegt die Aufgabe zugrunde, die Umstellung zwischen verschiedenen Folien- und Formattypen auf einfache Weise innerhalb derselben Vorrichtung vornehmen zu können, somit Material- und Wartungskosten zu minimieren und gleichzeitig eine korrekte Siegelung zu gewährleisten.

Diese Aufgabe wird durch die Merkmale des Anspruchs 1 gelöst.

Erfindungsgemäß weist die Vorrichtung zur Walzensiegelung von Folien eine drehbare Siegelwalze und eine drehbare Gegenwalze zur Siegelung einer Deckfolie auf eine Formfolie, die mit mehreren Höfen ausgestattet ist, auf. Dabei sind die Siegelwalze und die Gegenwalze gemeinsam verschiebbar oder um dieselbe Schwenkachse verschwenkbar, wobei der Abstand zwischen der Siegelwalze und der Gegenwalze konstant bleibt.

Durch diese Konstruktion wird gewährleistet, dass eine leichte Umstellung zwischen verschiedenen Folien- und Formattypen möglich ist, ohne einen Austausch von Teilen zu erfordern. Stattdessen können verschiedene Folienverläufe durch die Vorrichtung eingestellt werden, welche auf die jeweilige Anwendung optimiert sind.

Vorzugsweise weist die Gegenwalze Vertiefungen auf, welche der Form der Höfe der Formfolie entsprechen. Dadurch wird eine gezielte Siegelung der Deckfolie auf die Stege der Formfolie, welche zwischen den Höfen liegen, möglich.

Zur einfachen gemeinsamen Bewegung von Siegelwalze und Gegenwalze sind diese vorzugsweise mit einer Grundplatte verbunden, welche verschwenkbar oder verschiebbar ist.

Die Welle der Gegenwalze tritt durch die Grundplatte hindurch und ist vorzugsweise in dieser gelagert, und es ist ein Servomotor für ihren Antrieb vorgesehen. Auf diese Weise ist eine unabhängige Steuerung des Antriebs der Welle der Gegenwalze auf einfache Weise gewährleistet.

Die Welle der Siegelwalze ist vorzugsweise in einer Gabel gelagert, welche wiederum über eine Verbindungsstange drehbar in der Grundplatte gelagert ist. Durch diese Konstruktion wird ein einfacher Aufbau gewährleistet.

Die Verbindungsstange ist vorzugsweise mittels eines Antriebs drehbar, wodurch eine Verschwenkung der Siegelwalze ermöglicht wird. Auf diese Weise lässt sich der Siegeldruck zwischen Siegelwalze und Gegenwalze auf einfache Weise und gezielt einstellen.

Zum weiteren Ausgleich der Folienbewegungen ist die Siegelwalze mittels Ihrer Welle mit einem Servomotor verbunden. Die Welle der Siegelwalze ragt dabei durch eine Öffnung in der Grundplatte hindurch. Um die durch den Antrieb erzeugte Verschwenkung der Siegelwalze gegenüber der Gegenwalze zu ermöglichen, weist die Öffnung vorzugsweise eine gekrümmte Form auf, welche der Schwenkbewegung der Welle der Siegelwalze entspricht.

In einer ersten Ausführungsform ist die Grundplatte verschwenkbar und die Schwenkachse der Grundplatte liegt im Bereich der Welle der Gegenwalze. Hierdurch wird eine Verschwenkung der Siegelwalze gegenüber der Gegenwalze möglich, ohne dass der Abstand zwischen den beiden Walzen verändert wird.

Dabei bewirkt die Verschwenkung der Grundplatte vorzugsweise eine Bewegung der Siegelwalze von einer Position unmittelbar oberhalb der Gegenwalze zu einer Position im oberen seitlichen Bereich der Gegenwalze. Auf diese Weise kann von einer geraden Durchführung der Formfolie auf eine Umschlingung der Formfolie um die Gegenwalze umgestellt werden.

Um im zweiten Fall die gesiegelte Blisterbahn wieder in die ursprüngliche Transportrichtung der Formfolie umzulenken, ist vorzugsweise eine Umlenkwalze vorgesehen, welche unterhalb und seitlich versetzt zur Gegenwalze angeordnet ist.

In einer alternativen Ausführungsform ist die Grundplatte linear verschiebbar und die Vorrichtung weist zwei Umlenkwalzen auf, welche an zwei gegenüberliegenden Seiten der Gegenwalze angeordnet sind. Aufgrund der linearen Verschiebbarkeit der gesamten Anordnung, bei der auch die Siegelwalze und die Gegenwalze gleichmäßig verschoben werden, kann das Höhenniveau der gesamten Vorrichtung geändert werden und somit zwischen einer geraden Durchführung der Formfolie und einer die beiden Umlenkwalzen und die Gegenwalze umschlingenden Durchführung der Formfolie gewechselt werden.

Dabei ist die Siegelwalze vorzugsweise oberhalb der Gegenwalze angeordnet und definiert mit dieser einen Spalt, und die Umlenkwalzen sind seitlich versetzt unterhalb des Spalts angeordnet. Auf diese Weise wird lediglich durch Höhenverstellung der Grundplatte ein Formatwechsel bzw. ein Wechsel auf eine andere Anwendung möglich.

Weitere Eigenschaften, Merkmale und Vorteile der vorliegenden Erfindung ergeben sich aus der nachfolgenden Beschreibung unter Bezugnahme auf die Zeichnungen.
- Fig. 1: ist eine schematische Perspektivansicht einer ersten Ausführungsform der vorliegenden Erfindung in einer ersten Stellung, bei der die Formfolie gerade durch die Vorrichtung geführt wird;
- Fig. 2: ist eine schematische Perspektivansicht der Ausführungsform aus Fig. 1 in einer geschwenkten Stellung, bei der die Formfolie die Gegenwalze teilweise umschlingt;
- Fig. 3: ist eine schematische Perspektivansicht einer zweiten Ausführungsform der Erfindung in einer Stellung, bei der die Formfolie gerade durch die Vorrichtung geführt wird; und
- Fig. 4: ist eine schematische Perspektivansicht der Ausführungsform aus Fig. 3 in einer linear verschobenen Stellung, bei der die Formfolie die Gegenwalze teilweise umschlingt.

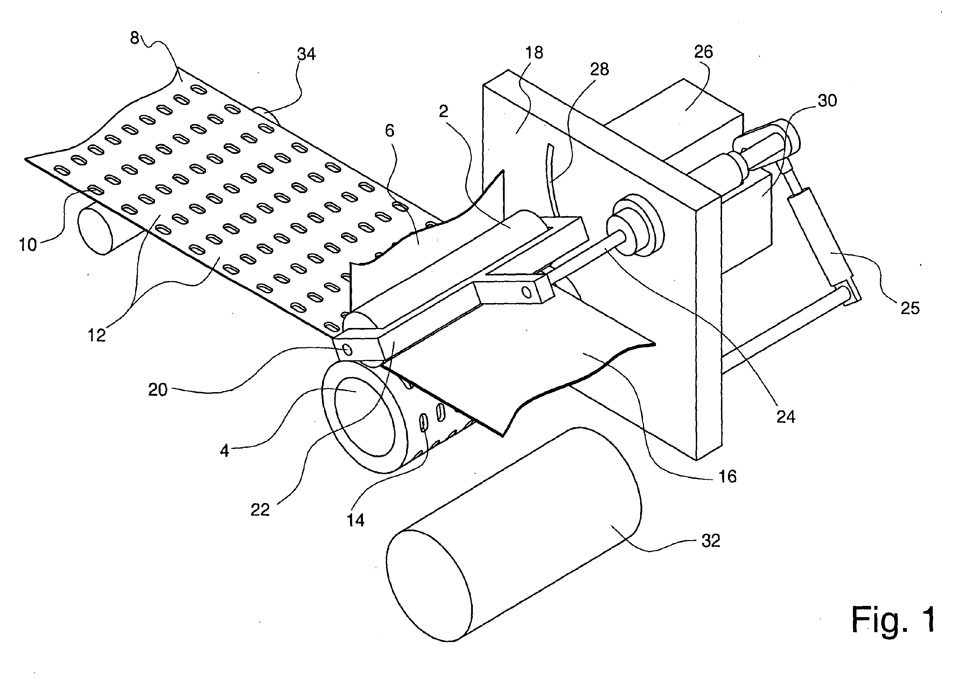

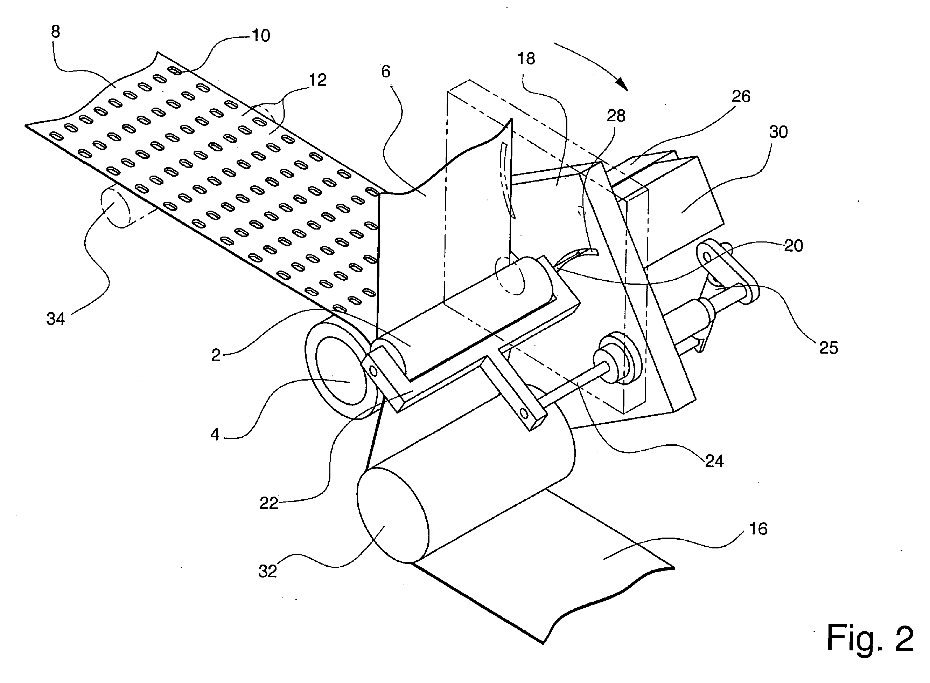

Das in Fig. 1 und 2 dargestellte. Ausführungsbeispiel der Vorrichtung zur Walzensiegelung von Folien umfasst eine Siegelwalze 2, welche mit einer Gegenwalze 4 zusammenwirkt. Die Siegelwalze 2 und die Gegenwalze 4 dienen dazu, eine Deckfolie 6 auf eine Formfolie 8 aufzulaminieren. Im bevorzugten Beispielsfall ist die Formfolie 8 eine mit mehreren Höfen 10 versehene Blisterfolie, wobei die Höfe 10 üblicherweise mit pharmazeutischen Produkten gefüllt sind. Die Deckfolie 6 wird auf die zwischen den Höfen 10 liegenden Stege 12 der Formfolie auflaminiert. Dabei ist die Siegelwalze 2 üblicherweise beheizt und übt einen leichten Druck auf die übereinander in den Spalt zwischen Siegelwalze 2 und Gegenwalze 4 gelangenden Folien 6, 8 aus. Damit die Blisterhöfe 10 unversehrt bleiben, weist die Gegenwalze 4 üblicherweise Vertiefungen 14 auf, welche der Größe und Anzahl der Höfe 10 entsprechen. Die Deckfolie 6 wird dabei dem Spalt zwischen Siegelwalze 2 und Gegenwalze 4 aus einem anderen Winkel zugeführt wie die Formfolie 8. In dem in Fig. 1 dargestellten Beispiel durchläuft die Formfolie 8 die Vorrichtung geradlinig, während die Deckfolie 6 unter einem Winkel von 90° hierzu zugeführt wird und mittels der Siegelwalze 2 in den Spalt zwischen Siegelwalze 2 und Gegenwalze 4 gelangt. Das laminierte Endprodukt ist beispielsweise eine Blisterbahn 16, aus der anschließend die einzelnen Blister gestanzt werden.

Sowohl die Siegelwalze 2 als auch die Gegenwalze 4 sind mit einer Grundplatte 18 verbunden. Die Siegelwalze 2 ist dabei über ihre Welle 20 in einer Gabel 22 gehalten, welche wiederum mittels einer Verbindungsstange 24 drehbar mit der Grundplatte 18 verbunden ist.

Die Siegelwalze 2 kann hierbei vorzugsweise mittels eines Antriebs 26 verschwenkbar bezüglich der Gegenwalze 4 ausgebildet sein, um den Spalt zwischen Siegelwalze 2 und Gegenwalze 4 den entsprechenden Bedürfnissen anzupassen und den auf die Folien 6, 8 ausgeübten Druck zu steuern. Der Antrieb 26 kann jede beliebige Form besitzen und kann beispielsweise mittels Schrittmotoren oder über manuelle mechanische Einstellung gesteuert werden.

In einer bevorzugten Ausführungsform ist die Welle 20 der Siegelwalze 2 außerdem mittels eines Servomotors 26 antreibbar, wodurch zum Beispiel ein Ausgleich der unterschiedlichen Foliengeschwindigkeiten stattfinden kann. In diesem Fall ragt die Welle 20 der Siegelwalze 2 vorzugsweise durch eine Öffnung 28 in der Grundplatte 18 hindurch und ist auf der anderen Seite der Grundplatte 18 mit dem Servomotor 26 verbunden. Die Öffnung 28 ist vorzugsweise gekrümmt ausgebildet, um die Schwenkbewegung der Siegelwalze 2 zu ermöglichen.

Die Gegenwalze 4 ist über einen Servomotor 30 angetrieben, der unabhängig vom optionalen Servomotor 26 der Siegelwalze 2 ist. Hierzu kann die Welle (nicht dargestellt) der Gegenwalze 4 drehbar in einer Öffnung (nicht dargestellt) der Grundplatte 18 gelagert sein und durch diese hindurchragen, wenn sich der Servomotor 30 auf der gegenüberliegenden Seite der Grundplatte 18 befindet.

Die Grundplatte 18 ist erfindungsgemäß verschwenkbar ausgebildet, wobei sich beim Verschwenkvorgang der Abstand zwischen Siegelwalze 2 und Gegenwalze 4 nicht ändert. Die Verschwenkung erfolgt vorzugsweise um eine Schwenkachse im Bereich der Welle der Gegenwalze 4. Nach der Verschwekung ist die Siegelwalze 2 nicht mehr unmittelbar oberhalb der Gegenwalze 4 angeordnet, sondern in einem seitlichen oberen Bereich der Gegenwalze 4, wie aus Fig. 2 ersichtlich ist. Aufgrund dieser Umstellung durchläuft die Formfolie 8 die Vorrichtung nun nicht mehr geradlinig, sondern sie umschlingt die Gegenwalze 4 teilweise, was zu einem Formschluss zwischen den Höfen 10 der Formfolie 8 und den Vertiefungen 14 in der Gegenwalze 4 führt. Eine solche Umschlingung ist für spezielle Folienarten bzw. Formattypen vorteilhaft, während für andere die geradlinige Durchführung der Formfolie 8 durch die Vorrichtung unumgänglich ist. Aufgrund der einfachen konstruktiven Änderung ist es daher möglich, auf einfache Weise eine Walzensiegelung verschiedener Folien und verschiedener Formattypen in derselben Vorrichtung ohne große Anpassungen durchzuführen.

Es kann eine Umlenkwalze 32 vorgesehen sein, welche die nach dem Siegelprozess nach unten geführte Blisterbahn 16 umlenkt und wieder in die ursprüngliche Einlaufrichtung der Formfolie 8 weiterbefördert. Diese Umlenkwalze 32 ist lediglich in der Stellung aus Fig. 2 im Einsatz, während sie in der Stellung aus Fig. 1 nicht betätigt wird. In der Position aus Fig. 2 wird üblicherweise nur noch die Gegenwalze 4 angetrieben, während die Siegelwalze 2 mitläuft.

Insbesondere im Ausführungsbeispiel der Fig. 1 kann eine zusätzliche angetriebene Walze 34 vorgesehen sein, welche die Funktion einer Bremse der Formfolie 8 besitzt. Sie wird notwendig, wenn die Siegelwalze 2 nicht mit einem Servomotor 26 angetrieben wird.

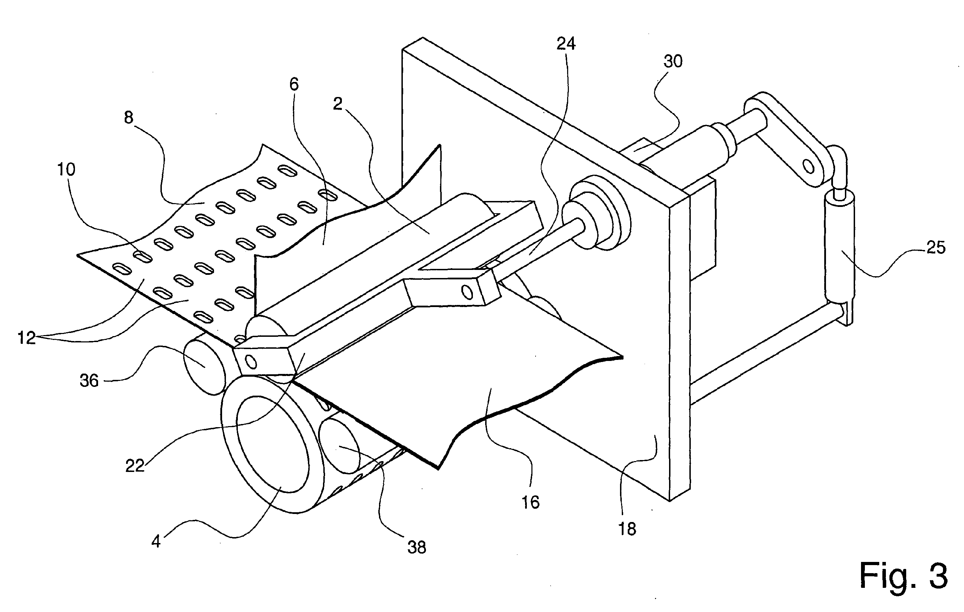

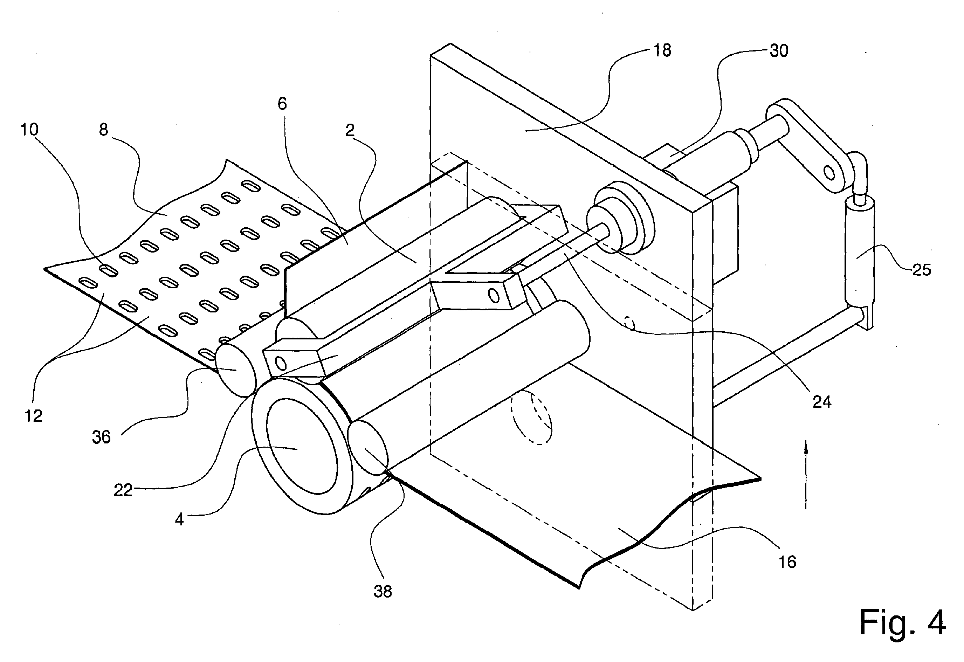

In Fig. 3 und 4 ist eine alternative Ausführungsform der erfindungsgemäßen Vorrichtung dargestellt. Diese entspricht im Wesentlichen der ersten Ausführungsform, allerdings ist die Grundplatte 18 in diesem Fall nicht verschwenkbar, sondern verschiebbar ausgestaltet. Fig. 3 zeigt dabei eine erste Stellung der Grundplatte 18, bei der die Formfolie 8 wiederum geradlinig durch die Vorrichtung hindurchläuft und in dem Spalt zwischen Siegelwalze 2 und Gegenwalze 4 mit der Deckfolie 6 zusammenlaminiert wird. Bei der nach oben geschobenen Stellung aus Fig. 4 hingegen wird die einlaufende Formfolie 8 zunächst durch eine erste Umlenkwalze 36 aufgenommen, welche sich seitlich neben der Gegenwalze 4 befindet. Vom Spalt zwischen der Umlenkwalze 36 und der Gegenwalze 4 aus wird die Formfolie 8 um die Gegenwalze 4 herumgewickelt und gelangt zum Spalt zwischen Siegelwalze 2 und Gegenwalze 4. Dort findet die Auflaminierung der Deckfolie 6 statt, woraufhin die produzierte Blisterbahn 16 weiter um den Mantelbereich der Gegenwalze 4 herumgewickelt und über eine weitere Umlenkwalze 38 in Förderrichtung weitertransportiert wird.

Somit wurde durch lineare Höhenverstellung der Grundplatte 18 das Einlaufniveau der Formfolie 8 in die Vorrichtung geändert und dadurch die lineare Bewegung der Formfolie aus Fig. 3 durch eine teilweise die Gegenwalze 4 umschlingende Bewegung ersetzt. Ebenso wie die Umlenkwalze 32 in der ersten Ausführungsform sind die beiden Umlenkwalzen 36 und 38 in dieser Ausführungsform lediglich in der in Fig. 4 dargestellten Position im Einsatz, während sie in der in Fig. 3 dargestellten Position nicht betätigt werden. Diese Umlenkwalzen 32, 36 und 38 können ebenfalls eigene Antriebe aufweisen.

Die erfindungsgemäße Idee lässt sich auch noch mit anderen Konstruktionen ausführen.

Wichtig dabei ist, dass durch gemeinsames Verschieben der Siegelwalze 2 und der Gegenwalze 4 bzw. durch Verschwenken der Siegelwalze 2 und der Gegenwalze 4 um eine gemeinsame Schwenkachse ein unterschiedliches Einlaufszenario für die Formfolie 8 geschaffen wird, welche daraufhin einen anderen Weg durch die Vorrichtung zur Walzensiegelung durchläuft. Dabei bleibt der Abstand zwischen Siegelwalze 2 und Gegenwalze 4 beim gemeinsamen Verschieben bzw. Verschwenken immer gleich.

Auf diese Weise ist es ohne Veränderungen an der Grundstruktur der Vorrichtung möglich, verschiedene Folienarten und Formattypen ohne größere Anpassungen auf bestmögliche Weise zu verarbeiten.

Es ist möglich, eine zusätzliche Höhenverstellung auszuführen, indem Siegelwalzen 2 unterschiedlichen Durchmessers verwendet werden.

## Patentansprüche

1. Vorrichtung zur Walzensiegelung von Folien, mit einer drehbaren Siegelwalze (2) und einer drehbaren Gegenwalze (4) zur Siegelung einer Deckfolie (6) auf eine Formfolie (8),
**dadurch gekennzeichnet, dass**
die Siegelwalze (2) und die Gegenwalze (4) gemeinsam verschiebbar oder um dieselbe Schwenkachse verschwenkbar sind, wobei der Abstand zwischen der Siegelwalze (2) und der Gegenwalze (4) konstant bleibt.

2. Vorrichtung nach Anspruch 1, **dadurch gekennzeichnet, dass** die Formfolie (8) mit mehreren Höfen (10) ausgestattet ist und die Gegenwalze (4) Vertiefungen (14) aufweist, welche der Form der Höfe (10) der Formfolie (8) entsprechen.

3. Vorrichtung nach Anspruch 1 oder 2, **dadurch gekennzeichnet, dass** die Siegelwalze (2) und die Gegenwalze (4) mit einer Grundplatte (18) verbunden sind, welche verschwenkbar oder verschiebbar ist.

4. Vorrichtung nach Anspruch 3, **dadurch gekennzeichnet, dass** die Welle der Gegenwalze (4) durch die Grundplatte (18) hindurchragt und dass ein Servomotor (30) für ihren Antrieb vorgesehen ist.

5. Vorrichtung nach Anspruch 3 oder 4, **dadurch gekennzeichnet, dass** die Welle (20) der Siegelwalze (2) in einer Gabel (22) gelagert ist, welche wiederum über eine Verbindungsstange (24) drehbar in der Grundplatte (18) gelagert ist.

6. Vorrichtung nach einem der vorangehenden Ansprüche, **dadurch gekennzeichnet, dass** die Verbindungsstange (24) mittels eines Antriebs (25) drehbar ist, wodurch eine Verschwenkung der Siegelwalze (2) relativ zur Gegenwalze (4) ermöglicht wird.

7. Vorrichtung nach einem der vorangehenden Ansprüche, **dadurch gekennzeichnet, dass** die Siegelwalze (2) mittels ihrer Welle (20) mit einem Servomotor (26) verbunden ist.

8. Vorrichtung nach einem der Ansprüche 3 bis 5, **dadurch gekennzeichnet, dass** die Welle (20) der Siegelwalze (2) durch eine Öffnung (28) in der Grundplatte (18) hindurchragt.

9. Vorrichtung nach Anspruch 8, **dadurch gekennzeichnet, dass** die Öffnung (18) eine gekrümmte Form aufweist, welche der Schwenkbewegung der Welle (20) der Siegelwalze (2) entspricht.

10. Vorrichtung nach einem der Ansprüche 3 bis 5, **dadurch gekennzeichnet, dass** die Grundplatte (18) verschwenkbar ist und die Schwenkachse mit der Drehachse der Gegenwalze (4) übereinstimmt.

11. Vorrichtung nach Anspruch 10, **dadurch gekennzeichnet, dass** die Verschwenkung der Grundplatte (18) eine Bewegung der Siegelwalze (2) von einer Position unmittelbar oberhalb der Gegenwalze (4) zu einer Position im oberen seitlichen Bereich der Gegenwalze (4) bewirkt.

12. Vorrichtung nach Anspruch 10 oder 11, **dadurch gekennzeichnet, dass** die Vorrichtung eine Umlenkwalze (32) aufweist, welche unterhalb und seitlich versetzt zur Gegenwalze (4) angeordnet ist.

13. Vorrichtung nach einem der Ansprüche 3 bis 5, **dadurch gekennzeichnet, dass** die Grundplatte (18) linear verschiebbar ist und dass die Vorrichtung zwei Umlenkwalzen (36, 38) aufweist, welche an zwei gegenüberliegenden Seiten der Gegenwalze (4) angeordnet sind.

14. Vorrichtung nach Anspruch 13, **dadurch gekennzeichnet, dass** die Siegelwalze (2) oberhalb der Gegenwalze (4) angeordnet ist und mit dieser einen Spalt definiert, und dass die Umlenkwalzen (36, 38) seitlich versetzt unterhalb des Spalts angeordnet sind.
